# EUROPEAN PATENT SPECIFICATION

(11) **EP 1 131 576 B1**
(45) Date of publication and mention of the grant of the patent: **12.06.2002**
(21) Application number: 00978097.4
(22) Date of filing: 19.10.2000
(51) Int. Cl.: F16K 31/40, B01D 46/04, B01D 46/24

(54) **DEVICE FOR CLEANING A FILTER**
VORRICHTUNG ZUR REINIGUNG EINES FILTERS
DISPOSITIF DE NETTOYAGE POUR FILTRE

(30) Priority: 22.10.1999 NL 1013371
(43) Date of publication of application: 12.09.2001
(73) Proprietor: ASCO CONTROLS B.V., 3925 BD Scherpenzeel (NL)
(72) Inventor: VAN DER ZEE, Jan, NL-3925 BD Scherpenzeel (NL); OOMEN, Tjerk, NL-3925 BD Scherpenzeel (NL)
(74) Representative: Hooiveld, Arjen Jan Winfried
(86) International application number: NL0000754
(87) International publication number: WO0129465

(56) References cited:
- EP-A- 0 922 479
- WO-A-93/01433
- WO-A-97/18026
- US-A- 4 911 401

## Description

The invention relates to a device for cleaning a filter, comprising a container in which a gas pressure can be built up, wherein the wall of the container includes a first opening, through which a discharge pipe extends into the container, which discharge pipe is provided with a circular valve seat at its end, and a second opening, through which the housing of a valve member extends into the container, which valve member is cylindrical in shape, at least near said valve seat, and which can bear against the valve seat with a circular edge thereof.

A device of this kind is disclosed in WO-A-93/01433, and it functions to clean a filter used for filtrating dust from air, for example, by passing air through the filter for a short period in a direction opposed to the direction of flow of the air to be cleaned. During said short period the velocity of the air is so high that the term gas surge applies here, whereby the dust is blown off the filter.

The gas surge is effected by leading gas from the container to the filter via the discharge pipe, whereby a valve is present in the container, which valve opens the connection between the container and the discharge pipe. It is important thereby that the a maximum dimension is used for the passage between the container and the discharge pipe that is created by the valve, so that the gas will encounter little resistance, enabling it to flow to the filter as a relatively substantial gas surge.

In order to achieve this, the discharge pipe is provided with circular valve seat at the end that extends into the container, wherein the valve seat is closed by a valve member, which is substantially cylindrical near the valve seat. As a result, a maximum inflow of gas to the discharge pipe is possible when the valve is opened. If a membrane would be used as the valve member, for example, less space would be available for the inflow of gas. Furthermore the housing of the valve member would have to extend to near the valve seat so as to make it possible to attach the membrane, which may likewise impede the inflow of gas.

In order to ensure a proper sealing action when using a cylindrical valve member, which is to mate with a circular valve seat, the position of the valve member with respect to the valve seat in the closed position of the valve must be precisely determined. With the device according to WO-A-93/01433 this is achieved by mounting the valve member, which is guided in the housing, with sufficient clearance in said housing, so that the valve member is capable of making a slight tilting movement so as to bear down sealingly on the valve seat.

The object of the invention is to provide a device wherein the gas encounters little resistance upon its passage through the valve, and wherein a reliable sealing action of the valve is ensured.

In order to accomplish that objective, the valve seat is connected to the housing in which the valve member is present, so that the valve seat will occupy a fixed position with respect to said housing at all times. When the valve member is correctly guided in the housing, the valve member will occupy a predetermined position with respect to the valve seat at all times in that case.

Preferably, the diameter of the cylindrical part of the valve member is smaller than the outside diameter of the valve seat, so that an advantageously shaped annular slit is formed upon opening of the valve, which is freely accessible to inflowing gas from all directions.

In one preferred embodiment the valve seat is spaced from the second opening within the container by some distance, preferably a distance of more than 10 mm, more preferably more than 15 mm, and even more preferably more than 20 mm. When the valve seat is spaced sufficiently far from the second opening within the container, the gas can flow to the valve seat from all directions.

The term "within the container" is understood to mean within a surface that is closed all around, on which practically the entire inner wall of the container rests. In the case of a cylindrical container, said surface is the cylindrical surface that is made up of the larger part of the inner wall of the container.

Preferably, the valve member extends into the container in the fully open position of the valve, so that also the entire annular slit between the valve member and the valve seat is positioned within the container. As a result of this arrangement, the gas can flow into the discharge pipe via the valve seat in an advantageous manner in the open position of the valve.

In one preferred embodiment connecting means are present between the housing and the valve seat, which connecting means leave more than 50%, preferably more than 75%, of the space in a radial plane surrounding the valve seat clear for the flow of gas to the discharge pipe. Preferably, said connecting means consist of a number of connecting elements, preferably three connecting elements, which are spaced out evenly around the valve seat.

In one preferred embodiment the valve member is connected to a membrane, which is attached to the housing all around. The valve member is thereby guided in its correct path by the membrane, and the movement of the valve member can be obtained from differences in the gas pressure on different sides of the membrane. Preferably, the valve member and the membrane are integrally formed of one material. The valve member is preferably substantially cylindrical thereby.

In one preferred embodiment the cylindrical part of the valve member is bevelled at the location where it abuts against the valve seat, so that the contact surface at the location of the circular line of contact between the valve member and the valve seat is a conical surface. This helps to ensure a good inflow of the gas into the discharge pipe, and also a proper sealing action between the valve member and the valve seat.

Preferably, the diameter of the circular line of contact between the valve seat and the valve member is equal to or larger than the inside diameter of the discharge pipe, preferably by more than 10%.

Preferably, the valve seat is attached to the discharge pipe by means of a screwed connection. The discharge pipe and the housing may each include a flange that abuts against the outer wall of the container, which flanges are larger than the first and the second opening, respectively, which flanges are pulled towards each other as a result of the discharge pipe on the one hand and the valve seat that is attached to the housing on the other hand being screwed together. In practice this has appeared to be an adequate and simple way of mounting the valve in the container.

The invention also relates to a method for assembling a device for cleaning a filter, comprising a container in which a gas pressure can be built up, wherein the wall of the container includes a first opening, through which a discharge pipe is passed into the container, which discharge pipe is provided with circular valve seat at its end, and a second opening, through which the housing of a valve member is passed into the container, which valve member is cylindrical in shape, at least near said valve seat, and wherein the valve seat attached to the housing is connected to one end of the discharge pipe.

Further aspects, which can be used individually as well as in combination with each other, are set forth in the description of the figures and defined in the claims.

In order to explain the invention more fully, an exemplary embodiment of a device for cleaning a filter will now be described with reference to the drawing.
Figure 1 is a side view of the device;
Figure 2 is a top plan view of the device;
Figure 3 is a bottom plan view of the device;
Figure 4 is a sectional view along line IV-IV in Figure 1;
Figure 5 is a side view of the device;
Figure 6 is a perspective view of a part of the device; and
Figures 7 - 9 show the mating relationship between the valve member and the valve seat.

The figures are schematic representations of the embodiment.

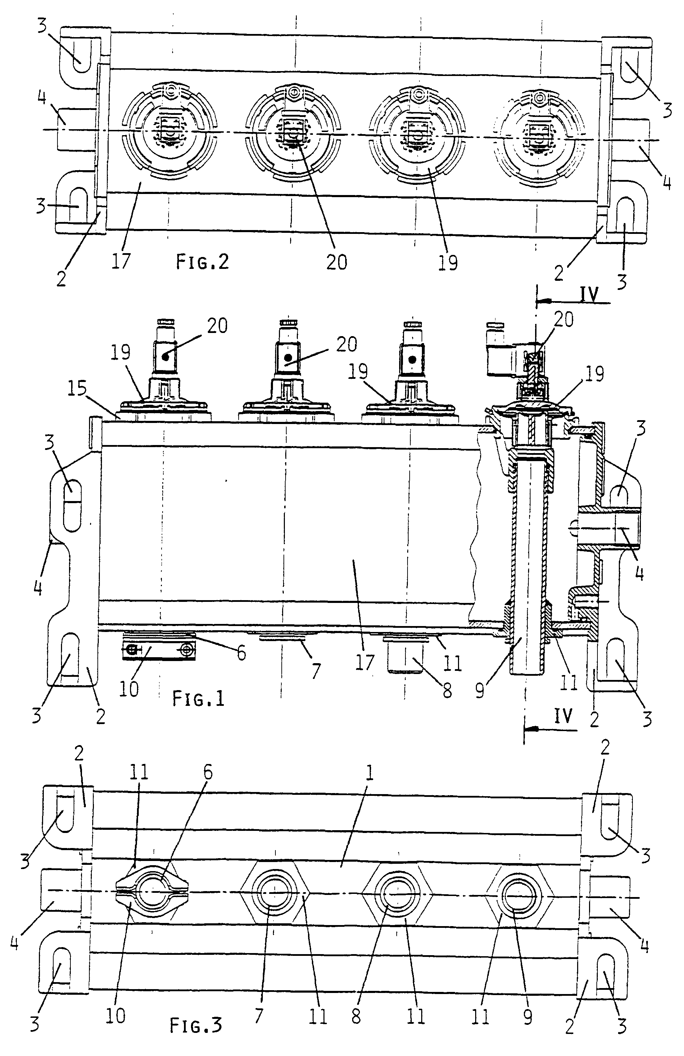

Figure 1 shows in side elevation a cylindrical or tubular container 1, which is closed at either end by an end plate 2, which is provided with holes 3 for mounting the device. End plates 2 are furthermore provided with a passage 4, which can be connected to a gas supply pipe for supplying a gas to container 1, so that a gas pressure can be built up in the container.

The two end plates 2 are connected together by means of four tie rods 5, which tie rods 5 extend through axially extending holes in the wall (17) of cylindrical container 1. It is also possible to attach the end plates 2 to the cylindrical part of the container 1 by means of bolts.

As is shown in Figures 1 and 3, four discharge pipes 6, 7, 8, 9 are present at the bottom side of the container, which discharge pipes extend into the container 1 through respective openings. Discharge pipe 6 is fitted with a clamp 10 for being connected to another pipe (not shown). Discharge pipe 7 is of the same type, but it does not include clamp 10. Discharge pipe 8 has a cylindrical external surface, so that a flexible hose (not shown) can be fixed to discharge pipe 8 by means of a hose clamp. Discharge pipe 9 is provided with external screw thread, to which a pipe (not shown) can be connected by means of a screwed connection.

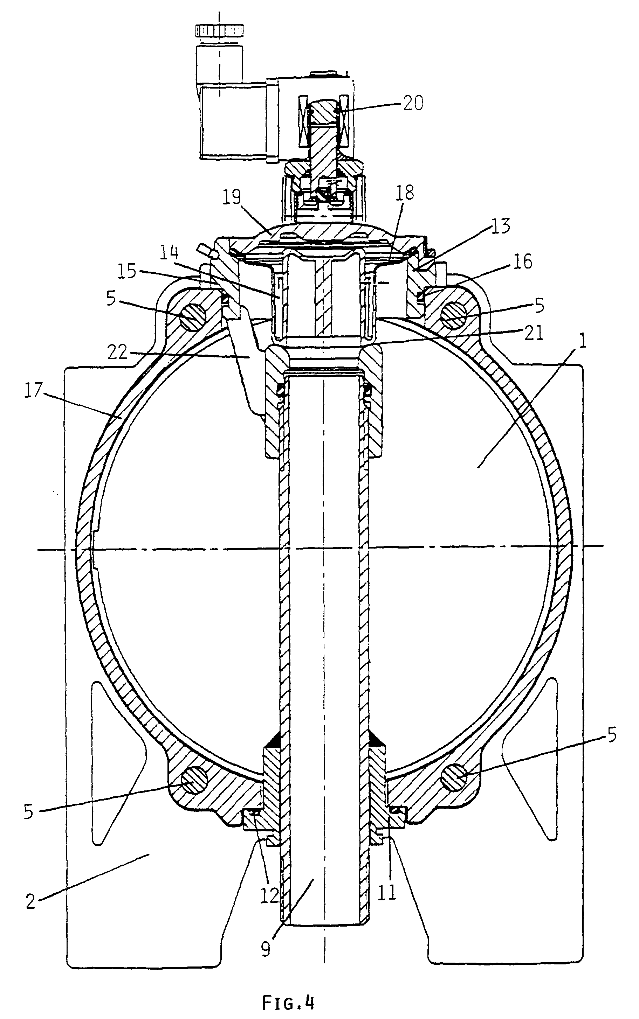

Each discharge pipe 6, 7, 8, 9 has a flange 11 welded thereon, which flange 11 abuts against the wall 17 of container 11 with the interposition of a sealing ring 12, as is also shown in Figure 4.

As is shown in Figure 4, an opening is present in the wall 17 of the container 1 directly opposite each opening for passing a discharge pipe 6, 7, 8, 9 therethrough, through which opening a housing 13 of a valve member 14 extends. Housing 13 has a flange 15, which bears against the wall 17 of container 1, and a sealing ring 16 provides a proper gastight seal between the housing 13 and the wall 17 of container 1.

Cylindrical valve member 14 is integrally connected to membrane 18, and valve member 14 can be moved in vertical direction by means of an electromagnetic actuator 20, by means of which the gas pressure above membrane 18 can be changed. This actuator is mounted above the cover 19 of the valve, which cover forms part of housing 13. Membrane 18 is clamped down between cover 19 and the other part of housing 13. It is also possible to use a remote actuator and connect it to the valve via a gas pipe, so that the valve is opened and closed by means of a pressure change in said gas pipe.

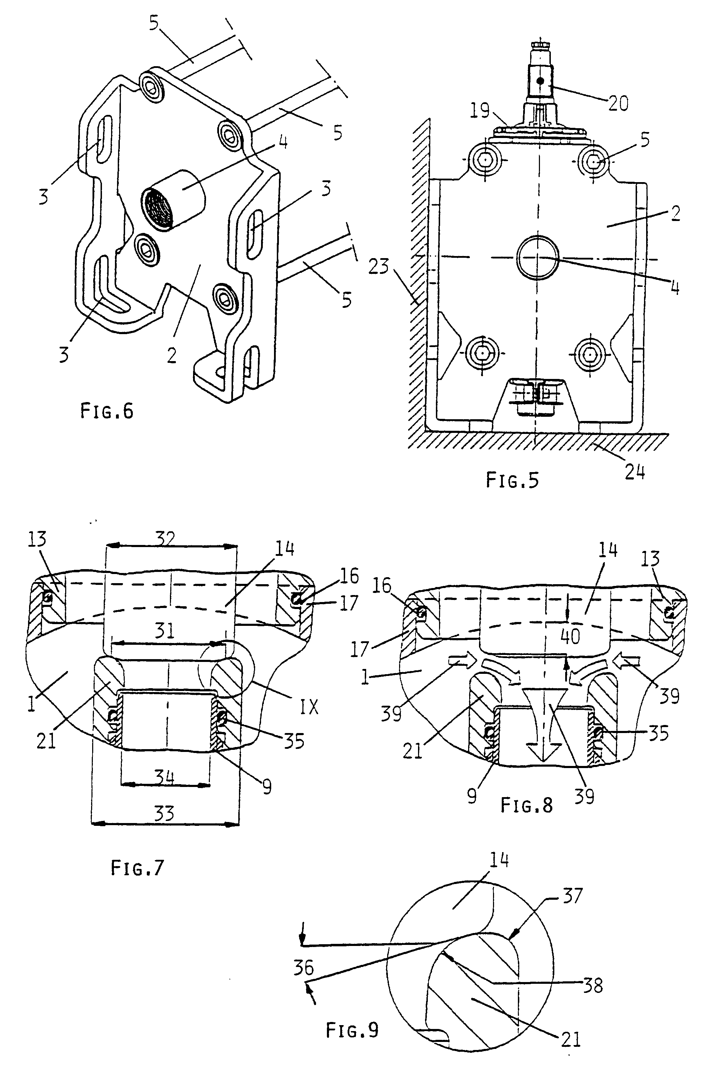

In the closed position of the valve, valve member 14 bears on the circular valve seat 21, which is connected to discharge pipe 9 by means of screw thread. Valve seat 21 is attached to housing 13 by means of three connecting elements 22, one of which is shown in Figure 5.

The valve is mounted in container 1 in that flanges 11 and 15 are pulled towards each other when discharge pipe 9 and valve seat 21 are being screwed together, causing them to abut firmly against the wall 17 of container 1.

Figure 5 shows the device is side view, wherein the device is disposed on a floor 24, against a wall 23, to which the device is secured by means of bolts (not shown), which extend through holes 3. The end plates 2 are constructed in such a manner that they can be fixed to a floor and/or to a wall.

Figure 6 shows the end plate 2 in perspective view, wherein the tie rods 5 are partially shown.

Figures 7 and 9 show the manner in which valve member 14 mates with valve seat 21.

Figure 7 is a detail view wherein the valve is shown in its closed position. Numeral 31 indicates the diameter of the circular line of contact between valve member 14 and valve seat 21. The outside diameter of the cylindrical valve member 14 is indicated at 32. valve seat 21 has an outside diameter 33, and discharge pipe 9 has an inside diameter 34. The valve seat is screwed onto the end of the discharge pipe 9 with the interposition of a sealing ring 35.

Figure 9 shows the detail that is indicated at IX in Figure 7, wherein the shape of the valve seat is illustrated. From Figure 9 it is apparent that the cylindrical part of the valve member 14 is bevelled at the location where it abuts against valve seat 21, so that the contact surface of the circular line of contact between the valve member 14 and the valve seat 21 is a conical surface, which extends at an angle, indicated at 36, with respect to the radial plane.

Figure 9 furthermore shows that the valve seat 21 is rounded both on the outside, with radius 37, and on the inside, with radius 38. This boosts the inflow of gas from container 1 to the discharge pipe 9 in the open position of the valve as shown in Figure 8. Said inflow is indicated by arrows 39.

Figure 8 furthermore shows that the valve member 14 extends some distance, which distance is indicated at 40, into container 1 in the open position of the valve.

The illustrated embodiment is merely an exemplary embodiment, many other embodiments are possible.

## Claims

1. A device for cleaning a filter, comprising a container (1) in which a gas pressure can be built up, wherein the wall (17) of the container (1) includes a first opening, through which a discharge pipe (9) extends into the container (1), which discharge pipe (9) is provided with a circular valve seat (21) at its end, and a second opening, through which the housing (13) of a valve member (14) extends into the container (1), which valve member (14) is cylindrical in shape, at least near said valve seat (21), **characterized in that** said valve seat (21) is connected to said housing (13).

2. A device according to claim 1, **characterized in that** the diameter (32) of the cylindrical part of the valve member (14) is smaller than the outside diameter (33) of the valve seat (21).

3. A device according to any one of the preceding claims, **characterized in that** the valve seat (21) is spaced from the second opening in the container (1) by some distance.

4. A device according to claim 3, **characterized in that** said distance is more than 10 mm, preferably more than 15 mm, and more preferably more than 20 mm.

5. A device according to any one of the preceding claims, **characterized in that** the valve member (14) extends into the container (1) in the fully open position of the valve.

6. A device according to any one of the preceding claims, **characterized in that** connecting means (22) are present between the housing (13) and the valve seat (21), which connecting means (22) leave more than 50%, preferably more than 75%, of the space in a radial plane surrounding the valve seat (21) clear for the flow of gas to the discharge pipe (9).

7. A device according to any one of the preceding claims, **characterized in that** connecting means are present between the housing (13) and the valve seat (21), which connecting means consist of a number of connecting elements (22), preferably three connecting elements, which are spaced out evenly around the valve seat (21).

8. A device according to any one of the preceding claims, **characterized in that** the valve member (14) is connected to a membrane (18), which is attached to the housing (13) all around.

9. A device according to claim 8, **characterized in that** the valve member (14) and the membrane (18) are integrally formed of one material.

10. A device according to any one of the preceding claims, **characterized in that** the cylindrical part of the valve member (14) is bevelled at the location where it abuts against the valve seat (21), so that the contact surface at the location of the circular line of contact between the valve member (14) and the valve seat (21) is a conical surface.

11. A device according to any one of the preceding claims, **characterized in that** the diameter of the circular line of contact between the valve seat (21) and the valve member (14) is equal to or larger than the inside diameter (34) of the discharge pipe (9), preferably by more than 10%.

12. A device according to any one of the preceding claims, **characterized in that** the valve seat (21) is attached to the discharge pipe (9) by means of a screwed connection.

13. A device according to any one of the preceding claims, **characterized in that** the discharge pipe (9) and the housing (13) each include a flange (11, 15) that abuts against the wall (17) of the container (1), which flanges are larger than the first and the second opening, respectively, and which flanges (11, 15) are pulled towards each other as a result of the discharge pipe (9) on the one hand and the valve seat (21) attached to the housing (13) on the other hand being screwed together.

14. A method for assembling a device for cleaning a filter, comprising a container (1) in which a gas pressure can be built up, wherein the wall (17) of the container (1) includes a first opening, through which a discharge pipe (9) is passed into the container (1), which discharge pipe (9) is provided with circular valve seat (21) at its end, and a second opening, through which the housing (13) of a valve member (14) is passed into the container (1), which valve member (14) is cylindrical in shape, at least near said valve seat (21), and is capable of abutment against the valve seat (21) with a circular edge thereof, **characterized in that** the valve seat (21) attached to the housing (13) is connected to one end of the discharge pipe (9).

## Patentansprüche

1. Eine Vorrichtung zur Reinigung eines Filters, mit einem Behälter (1), in dem ein Gasdruck aufgebaut werden kann, wobei die Wand (17) des Behälters (1) eine erste Öffnung, durch die ein Ablaufrohr (9) sich in den Behälter (1) erstreckt, wobei das Ablaufrohr (9) mit einem kreisförmigen Ventilsitz (21) an seinem Ende versehen ist, und eine zweite Öffnung enthält, durch die das Gehäuse (13) eines Ventilelements (14) sich in den Behälter (1) erstreckt, wobei das Ventilelement (14), zumindest in der Nähe besagten Ventilsitzes (21), eine zylindrische Gestalt aufweist, **dadurch gekennzeichnet, daß** der Ventilsitz (21) mit besagtem Gehäuse (13) verbunden ist.

2. Vorrichtung nach Anspruch 1, **dadurch gekennzeichnet, daß** der Durchmesser (32) des zylindrischen Teils des Ventilelements (14) kleiner als der Außendurchmesser (33) des Ventilsitzes (21) ist.

3. Vorrichtung nach irgendeinem der vorangehenden Ansprüche, **dadurch gekennzeichnet, daß** der Ventilsitz (21) von der zweiten Öffnung in dem Behälter (1) um eine gewisse Distanz beabstandet ist.

4. Vorrichtung nach Anspruch 3, **dadurch gekennzeichnet, daß** besagte Distanz mehr als 10 mm, vorzugsweise mehr als 15 mm und noch bevorzugter mehr als 20 mm beträgt.

5. Vorrichtung nach irgendeinem der vorangehenden Ansprüche, **dadurch gekennzeichnet, daß** das Ventilelement (14) sich in den Behälter (1) in der vollständig geöffneten Position des Ventils erstreckt.

6. Vorrichtung nach irgendeinem der vorangehenden Ansprüche, **dadurch gekennzeichnet, daß** Verbindungsmittel (22) zwischen dem Gehäuse (13) und dem Ventilsitz (21) vorhanden sind, wobei die Verbindungsmittel (22) mehr als 50 %, bevorzugter mehr als 75 % es Raumes in einer den Ventilsitz (21) umgebenden radialen Ebene für die Strömung von Gas zum Ablaufrohr (9) freilassen.

7. Vorrichtung nach irgendeinem der vorangehenden Ansprüche, **dadurch gekennzeichnet, daß** die Verbindungsmittel zwischen dem Gehäuse (13) und dem Ventilsitz (21) vorhanden sind, wobei die Verbindungsmittel aus einer Zahl von Verbindungselementen (22), vorzugsweise drei Verbindungselementen, bestehen, die gleichmäßig um den Ventilsitz (21) in Abständen verteilt sind.

8. Vorrichtung nach irgendeinem der vorangehenden Ansprüche, **dadurch gekennzeichnet, daß** das Ventilelement (14) mit einer Membran (18) verbunden ist, die ganz um das Gehäuse (13) angebracht ist.

9. Vorrichtung nach Anspruch 8, **dadurch gekennzeichnet, daß** das Ventilelement (14) und die Membran (18) integral aus einem Material gebildet sind.

10. Vorrichtung nach irgendeinem der vorangehenden Ansprüche, **dadurch gekennzeichnet, daß** der zylindrische Teil des Ventilelements (14) an dem Ort, an dem der an den Ventilsitz (21) angegrenzt, abgeschrägt ist, so daß die Kontaktfläche an der Stelle der kreisförmigen Kontaktlinie zwischen dem Ventilelement (14) und dem Ventilsitz (21) eine konische Fläche ist.

11. Vorrichtung nach irgendeinem der vorangehenden Ansprüche, **dadurch gekennzeichnet, daß** der Durchmesser der kreisförmigen Kontaktlinie zwischen dem Ventilsitz (21) und dem Ventilelement (14) gleich dem oder größer als der Innendurchmesser (34) des Ablaufrohres (9), vorzugsweise um mehr als 10 %, ist.

12. Vorrichtung nach irgendeinem der vorangehenden Ansprüche, **dadurch gekennzeichnet, daß** der Ventilsitz (21) mittels einer Schraubverbindung an dem Ablaufrohr (9) angebracht ist.

13. Vorrichtung nach irgendeinem der vorangehenden Ansprüche, **dadurch gekennzeichnet, daß** das Ablaufrohr (9) und das Gehäuse (13) jeweils einen Flansch (11, 15) enthalten, der an die Wand (17) des Behälters (1) grenzt, wobei die Flansche jeweils größer als die erste und zweite Öffnung sind, und die Flansche (11, 15) als Folge dessen, daß das Ablaufrohr (9) einerseits und der an dem Gehäuse (13) angebrachte Ventilsitz (21) andererseits verschraubt sind, zueinander gezogen werden.

14. Ein Verfahren zum Montieren einer Vorrichtung zur Reinigung eines Filters, die einen Behälter (1) umfaßt, in dem ein Gasdruck aufgebaut werden kann, wobei die Wand (17) des Behälters (1) eine erste Öffnung, durch die ein Ablaufrohr (9) in den Behälter (1) geführt wird, wobei das Ablaufrohr (9) mit einem kreisförmigen Ventilsitz (21) an seinem Ende versehen ist, und eine zweite Öffnung enthält, durch die das Gehäuse (13) eines Ventilelements (14) in den Behälter (1) geführt wird, wobei das Ventilelement (14), zumindest in der Nähe des Ventilsitzes (21), eine zylindrische Gestalt aufweist und an den Ventilsitz (21) mit einer kreisförmigen Kante desselben anliegen kann, **dadurch gekennzeichnet, daß** der an dem Gehäuse (13) angebrachte Ventilsitz (21) mit einem Ende des Ablaufrohres (9) verbunden wird.

## Revendications

1. Dispositif pour le nettoyage d'un filtre, comprenant un conteneur (1) dans lequel peut être établie une pression d'un gaz, dans lequel dispositif la paroi (17) du conteneur (1) comprend une première ouverture, à travers laquelle s'étend à un conduit de décharge (9) à l'intérieur du conteneur (1), lequel conduit de décharge (9) comporte un siège de soupape circulaire (21) à son extrémité, et une seconde ouverture, à travers laquelle s'étend à l'intérieur du conteneur (1) le logement (13) d'un organe de soupape (14), lequel organe de soupape (14) a une forme cylindrique, au moins au voisinage dudit siège de soupape (21), **caractérisé en ce que** ledit siège de soupape (21) est relié audit logement (13).

2. Dispositif selon la revendication 1, **caractérisé en ce que** le diamètre (32) de la partie cylindrique de l'organe de soupape (14) est plus petit que le diamètre extérieur (33) du siège de soupape (21).

3. Dispositif selon l'une quelconque des revendications précédentes, **caractérisé en ce que** le siège de soupape (21) est espacé de la seconde ouverture dans le conteneur (1) d'une certaine distance.

4. Dispositif selon la revendication 3, **caractérisé en ce que** ladite distance est supérieure à 10 mm, de préférence supérieure à 15 mm, et de façon encore préférée supérieure à 20 mm.

5. Dispositif selon l'une quelconque des revendications précédentes, **caractérisé en ce que** l'organe de soupape (14) s'étend à l'intérieur du conteneur (1) dans la position pleinement ouverte de la soupape.

6. Dispositif selon l'une quelconque des revendications précédentes, **caractérisé en ce que** des moyens de connexion (22) sont présents entre le logement (13) et le siège de soupape (21), lesquels moyens de connexion (22) laissent libre plus de 50%, de préférence plus de 75% de l'espace dans un plan radial qui entoure le siège de soupape (21) pour l'écoulement du gaz vers le conduit de décharge (9).

7. Dispositif selon l'une quelconque des revendications précédentes, **caractérisé en ce que** des moyens de connexion sont présents entre le logement (13) et le siège de soupape (21), lesquels moyens de connexion sont constitués par un certain nombre d'éléments de connexion (22), de préférence trois éléments de connexion, lesquels sont espacés de façon égale autour du siège de soupape (21).

8. Dispositif selon l'une quelconque des revendications précédentes, **caractérisé en ce que** l'organe de soupape (14) est relié à une membrane (18), laquelle est fixée au boîtier (13) tout autour.

9. Dispositif selon la revendication 8, **caractérisé en ce que** l'organe de soupape (14) et la membrane (18) sont formés intégralement en un matériau.

10. Dispositif selon l'une quelconque des revendications précédentes, **caractérisé en ce que** la partie cylindrique de l'organe de soupape (14) est biseautée à l'endroit où elle vient buter contre le siège de soupape (21), de sorte que la surface de contact à l'emplacement de la ligne circulaire de contact entre l'organe de soupape (14) et le siège de soupape (21) est une surface conique.

11. Dispositif selon l'une quelconque des revendications précédentes, **caractérisé en ce que** le diamètre de la ligne circulaire de contact entre le siège de soupape (21) et l'organe de soupape (14) est égal ou supérieur au diamètre intérieur (34) du conduit de décharge (9), de préférence de plus de 10%.

12. Dispositif selon l'une quelconque des revendications précédentes, **caractérisé en ce que** le siège de soupape (21) est fixé au conduit de décharge (9) au moyen d'une connexion vissée.

13. Dispositif selon l'une quelconque des revendications précédentes, **caractérisé en ce que** le conduit de décharge (9) et le logement (13) comprennent chacun un flasque (11,15) qui vient buter contre la paroi (17) du conteneur (1), lesquels flasques sont plus grands que la première et la seconde ouvertures, respectivement, et lesquels flasques (11,15) sont tirés l'un vers l'autre en conséquence du conduit de décharge (9) d'une part et du siège de soupape (21) fixé au logement (13) d'autre part, en étant vissés ensemble.

14. Procédé d'assemblage d'un dispositif pour le nettoyage d'un filtre, comprenant un conteneur (1) dans lequel peut être établie une pression de gaz, dans lequel la paroi (17) du conteneur (1) comprend une première ouverture, à travers laquelle passe un conduit de décharge (9) à l'intérieur du conteneur (1), lequel conduit de décharge (9) comporte un siège de soupape circulaire (21) à son extrémité, et une seconde ouverture, à travers laquelle passe le logement (13) d'un organe de soupape (14) à l'intérieur du conteneur (1), lequel organe de soupape (14) a une forme cylindrique, au moins au voisinage dudit siège de soupape (21), et est susceptible de venir buter contre le siège de soupape (21) par son bord circulaire, **caractérisé en ce que** le siège de soupape (21) fixé audit logement (13) est connecté à une extrémité du conduit de décharge (9).
